# EUROPÄISCHE PATENTSCHRIFT

(11) **EP 3 597 490 B1**
(45) Veröffentlichungstag und Bekanntmachung des Hinweises auf die Patenterteilung: **23.02.2022**
(21) Anmeldenummer: 19177406.6
(22) Anmeldetag: 29.05.2019
(51) Int. Cl.: B60R 25/30, G01G 19/02, B60P 1/00, B60R 1/00

(54) **VERFAHREN ZUR ÜBERWACHUNG DES BELADUNGSZUSTANDES VON NUTZFAHRZEUGEN ODER WECHSELAUFBAUTEN FÜR NUTZFAHRZEUGE**
METHOD FOR MONITORING THE CONDITION OF COMMERCIAL VEHICLES OR INTERCHANGEABLE BODIES FOR COMMERCIAL VEHICLES
PROCÉDÉ DE SURVEILLANCE DE L'ÉTAT DE CHARGEMENT DES VÉHICULES UTILITAIRES OU CAISSES MOBILES POUR VÉHICULES UTILITAIRES

(30) Priorität: 19.07.2018 DE 102018117541
(43) Veröffentlichungstag der Anmeldung: 22.01.2020
(73) Patentinhaber: Fahrzeugwerk Bernard Krone GmbH & Co. KG, 49757 Werlte (DE)
(72) Erfinder: Schniederbruns, Hendrik, 49835 Wietmarschen (DE); Horstmann, Jan, 48431 Rheine (DE); Merten, Sven, 49757 Werlte (DE)
(74) Vertreter: Pott, Ulrich

(56) Entgegenhaltungen:
- EP-A1- 3 543 928
- CN-A- 106 904 114
- DE-A1- 10 334 708
- DE-A1- 19 816 821
- DE-A1-102004 032 729
- DE-A1-102016 010 881
- DE-U1-202006 018 149
- KR-A- 20120 004 651
- US-A1- 2016 297 361

## Beschreibung

Die Erfindung betrifft ein Verfahren zur Überwachung des Beladungszustandes von Nutzfahrzeugen oder von Wechselaufbauten für Nutzfahrzeuge.

Ein Nutzfahrzeug wie ein angetriebener Lastkraftwagen oder ein Anhänger bzw. Sattelauflieger dient dem Transport von Ladegut, welches sich währenddessen in einem Laderaum des Nutzfahrzeugs befindet. Zur Erfassung des Umfangs eines von Ladegut freien bzw. mit Ladegut belegten Anteils des Laderaumes ist unter anderem eine Vorrichtung gemäß DE 10 2016 010 881 bekannt. Zur Erkennung von Ladegut im Laderaum werden dabei eine PMD-Kamera und/oder ein Laser-Scanner sowie zumindest eine Belichtungseinheit zur Aussendung von gerichtetem Licht und ein Time-Off-Flight-Sensor eingesetzt. Zur Identifizierung von Ladegut wird eine Reflexionszeit für unterschiedliche Lichtsignale gemessen.

Nachteilig am Verfahren gemäß dem Stand der Technik sind ein extrem hoher Aufwand zur Anwendung des Verfahrens sowie häufige Ausfälle des Messsystems aufgrund unterschiedlicher Störgrößen.

Aus der JP 2013-35399 A ist ein Verfahren zur Überwachung des Beladungszustandes von Nutzfahrzeugen oder Wechselaufbauten für Nutzfahrzeuge bekannt, bei dem eine Kamera ein Prüfbild eines Laderaumes aufnimmt und eine Auswerteeinheit das Prüfbild mit einem hinterlegten Referenzbild abgleicht und zumindest einen Kennwert für das Ausmaß eines mit Ladegut belegten und von Ladegut freiem Laderaumanteil berechnet. Damit ist es jedoch nicht möglich, Ladeflächenparzellen im Einzelnen hinsichtlich ihres Beladungszustandes oder Entladungszustandes zu bestimmen.

Darüber hinaus ist aus der US 2010/0073476 A1 ein Verfahren zur Messung eines dreidimensionalen Profils bekannt. Aus der US 2008/0025565 A1 ist ein Verfahren zur Bestimmung eines Beladungszustandes bekannt. Aus der DE 10 2016 013 873 A1 ist ein Verfahren zum Betrieb eines Fahrzeuges und zur Erfassung einer Beladung bekannt.

Aus der US 2016/297361 A1 ist ein Verfahren zur Überwachung des Beladungszustandes von Nutzfahrzeugen oder Wechselaufbauten für Nutzfahrzeuge bekannt, bei dem eine Kamera ein Prüfbild eines Laderaumes aufnimmt und eine Auswerteeinheit das Prüfbild mit einem hinterlegten Referenzbild abgleicht und zumindest einen Kennwert für das Ausmaß eines mit Ladegut belegten oder von Ladegut freien Laderaumanteils berechnet.

Aufgabe der vorliegenden Erfindung ist die Bereitstellung eines Verfahrens sowie eines Nutzfahrzeugaufbaus zur Anwendung des Verfahrens, durch das die Überwachung des Beladungszustandes zuverlässiger und bei einer umfangreichen Funktionalität umsetzbar ist. Erfindungsgemäß wird diese Aufgabe durch ein Verfahren gemäß Patentanspruch 1 gelöst. Ein Nutzfahrzeugaufbau löst die Aufgabe in einer Ausgestaltung nach dem Patentanspruch 15.

Insbesondere wird das Referenzbild vor Aufnahme des Prüfbildes bei leerem Laderaum aufgenommen. Der Laderaum gilt bei Abwesenheit von Lade- bzw. Transportgut als leer. Das Referenzbild wird insbesondere von derselben Kamera und aus derselben Kameraposition aufgenommen, von der auch das Prüfbild aufgenommen wird. Das Prüfbild wird ebenso wie das Referenzbild insbesondere zumindest temporär als eine Bilddatei gespeichert, die mit einem geeigneten Programm einer Rechnereinheit geöffnet wird und insbesondere zur zweidimensionalen Darstellung des Laderaums aus der Perspektive der Kamera führt.

Der Laderaum des Nutzfahrzeuges oder des Wechselaufbaus ist insbesondere quaderförmig und vollständig umgrenzt. Die Kamera befindet sich innerhalb des Laderaumes oder unmittelbar benachbart dazu. Bevorzugt ist das Prüfbild zweidimensional und wird zumindest temporär als zweidimensionale Rastergrafik abgelegt. Nach dessen Aufnahme wird es an die Auswerteeinheit übersendet.

Die Auswerteeinheit umfasst vorzugsweise eine Rechnereinheit zum Abgleich des Prüfbildes mit dem Referenzbild. Insbesondere ist die Auswerteeinheit eine Telematikeinheit, welche zur Kommunikation über Ethernet, LAP, CAN-Bus, W-LAN, Mobilfunk und/oder Bluetooth ausgebildet ist. Insbesondere hat die Auswerteeinheit ein GSM-Modul und ist dadurch internetfähig.

Die Auswerteeinheit berechnet auf Basis des Prüfbildes und des Referenzbildes den Kennwert. Der Kennwert ist insbesondere entweder ein relativer Wert für das Ausmaß des Beladungszustandes (z. B. 0 für unbeladen, 1 für vollständig beladen) oder ein absoluter Wert für die Angabe freien oder belegten Laderaums beispielsweise in m³ oder für die Angabe freier oder belegter Ladefläche in m².

Das vorbeschriebene Verfahren wird automatisch nach vorgegebenen Zeitintervallen wiederholt und insbesondere ein vorheriger Kennwert nach jeder Ausführung des Verfahrens überschrieben. Die Zeitintervalle haben insbesondere eine Dauer von höchstens 60 Sekunden, bevorzugt von höchstens 10 Sekunden.

Gemäß der Erfindung wird beim Abgleichen der die Ladefläche zeigende Teil des Prüfbildes in Prüfbildausschnitte unterteilt, wovon jeder eine gedachte Ladeflächenparzelle zeigt. Auf dem Prüfbild wird dazu zunächst der Teil des Prüfbildes erkannt, welcher die Ladefläche des Nutzfahrzeugs bzw. des Wechselaufbaus zeigt. Dieser Teil wird anschließend durch die Rechnereinheit zur Bewertung des Beladungszustandes in mehrere Profilbildausschnitte separiert. Jeder Prüfbildausschnitt zeigt eine Ladeflächenparzelle als einen Teil der Ladefläche. Durch diese Unterteilung wird die Berechnung des Kennwertes vereinfacht und eine geringere Fehlerquote bei der Auswertung erreicht.

Auf dem Referenzbild ist die Ladefläche insbesondere derart abgebildet, dass deren in eine Fahrtrichtung des Nutzfahrzeugs verlaufende seitliche Grenzen zumindest teilweise dargestellt werden und einen im Wesentlichen geraden Verlauf haben. Eine geringfügige Krümmung dieser Grenzen kann dabei durch das Objektiv der Kamera begründet sein. Bei Verlängerung gedachter auf den Grenzen liegender Grenzlinien über ein zumindest teilweise im Referenzbild gezeigtes Frontbegrenzungselement, insbesondere eine Frontwand, des Nutzfahrzeugs bzw. des Wechselaufbaus hinaus würden sich die Grenzlinien perspektivenbegründet in einem Fluchtpunkt schneiden.

Bevorzugt grenzen in Fahrtrichtung, die im Prüfbild insbesondere auf den Fluchtpunkt gerichtet ist, zumindest vier Prüfbildabschnitte und in eine Querrichtung zumindest drei Prüfbildausschnitte aneinander an. Die Fahrtrichtung ist bei einer Draufsicht auf die Ladefläche parallel zu den seitlichen Grenzen der Ladefläche angeordnet. Die Querrichtung ist dabei in einer Draufsicht auf die Ladefläche rechtwinklig dazu und parallel zu einer Kante des Frontbegrenzungselements. Die Anzahl und die Anordnung der Prüfbildausschnitte ermöglicht eine separate Überwachung von Ladeflächenparzellen, die sowohl in Fahrtrichtung als auch in Querrichtung voneinander abweichend angeordnet sind.

Besonders bevorzugt sind die Ladeflächenparzellen rechteckig und haben die gleiche Größe. Insbesondere haben die Ladeflächenparzellen eine Größe von höchstens 80 cm × 120 cm. Dadurch kann für jede Ladeflächenparzelle einzeln das Vorhandensein einer etwaigen, darin befindlichen Europalette mit derselben Stellfläche bewertet werden. Bevorzugt haben die Ladeflächenparzellen eine geringere Größe. Bei einer rechteckigen Form der Ladeflächenparzellen sind die entsprechenden Prüfbildausschnitte viereckig, wobei perspektivenbedingt allenfalls eine in Fahrtrichtung vordere Grenzlinie eines Prüfbildausschnittes parallel zu einer in Fahrtrichtung hinteren Grenzlinie dessen angeordnet ist.

Gemäß der Erfindung wird jeder Prüfbildausschnitt einzeln mit einem zugeordneten Referenzbildausschnitt abgeglichen und jede Ladeflächenparzelle einzeln entweder als mit Ladegut belegt oder von Ladegut frei bewertet. Der Abgleich von Prüfbild und Referenzbild hat dabei eine Anzahl von Schritten, die der Anzahl von Prüfbildausschnitten entspricht. In jedem Schritt wird ein Prüfbildausschnitt mit einem Referenzbildausschnitt verglichen, wobei eine umlaufende Randlinie der Ausschnitte insbesondere einen identischen Verlauf hat und die Ausschnitte derselben Position innerhalb des jeweiligen Bildes zugeordnet sind. Dadurch lässt sich der Abgleich bei Beanspruchung möglichst geringer Rechenleistung umsetzen.

Bevorzugt wird eine Ladeflächenparzelle als von Ladegut frei bewertet, wenn einer der eine Ladeflächenparzelle zeigenden Prüfbildausschnitte zu zumindest 50 %, insbesondere zu zumindest 90 % seiner Fläche mit dem zugeordneten Referenzbildausschnitt übereinstimmt. Dadurch führen temporäre Unreinheiten auf der Ladefläche oder kleine Objekte, die nicht dem Ladegut zuzurechnen sind, nicht zu einer fehlerhaften Bewertung einer Ladeflächenparzelle als mit Ladegut belegt. Der Anteil der übereinstimmenden Fläche wird insbesondere bereinigt von der kameraperspektivenbedingten Verzerrung sowohl des Prüfbildes als auch des Referenzbildes bzw. der Ladenflächenparzelle bestimmt. Dadurch lässt sich die Übereinstimmung besonders robust bestimmen.

Eine Übereinstimmung von dem Prüfbildausschnitt und dem Referenzbildausschnitt wird anhand der Helligkeit und/oder der Farbwerte von den Prüfbildausschnitt und den Referenzbildausschnitt bildenden Pixeln beurteilt. In Anbetracht dessen, dass Ladegut in aller Regel sowohl hinsichtlich der Farbwerte als auch hinsichtlich der Helligkeit der Farben von der Ladefläche abweicht, lässt sich anhand von diesen Kriterien eine Übereinstimmung besonders zuverlässig bewerten. Alternativ enthält das Prüfbild keine Farbinformationen, sondern lediglich Grauwerte und unterschiedliche Helligkeiten, anhand derer die Übereinstimmung beurteilt wird.

Vorzugsweise nimmt eine weitere, insbesondere im vorderen Bereich des Laderaumes angeordnete Kamera ein weiteres Prüfbild desselben Laderaumes auf. Insbesondere nehmen die zwei unterschiedlichen Kameras Prüfbilder des Laderaumes aus unterschiedlichen Perspektiven auf, wobei sie sich bevorzugt in gegenüberliegenden Endbereichen des Laderaumes befinden. Dadurch wird verhindert, dass möglicherweise von Ladegut freier Laderaum aufgrund einer optischen Verdeckung durch in Perspektive einer Kamera davor angeordneten Ladegutes fälschlicherweise als mit Ladegut belegt bewertet wird. Insbesondere bei in der Mitte der Ladefläche angeordnetem Ladegut, das ein geringeres Ausmaß hat als der Laderaum, lassen sich durch die beiden Kameras beiderseitig freie Anteile des Laderaumes identifizieren.

Bevorzugt nehmen unterschiedliche Kameras je ein Profilbild unterschiedlicher Laderäume auf und übermitteln diese an dieselbe Auswerteeinheit. Die unterschiedlichen Laderäume werden insbesondere von miteinander gekoppelten Nutzfahrzeugen ausgebildet. Insbesondere wird einer der Laderäume durch eine Zugmaschine mit einem Aufbau und der andere Laderaum durch einen damit gekoppelten Anhänger ausgebildet. Durch die Übersendung der Prüfbilder an dieselbe Auswerteeinheit kann durch diese trotz der zwei einzelnen Laderäume berechnet werden, wie groß ein belegter oder unbelegter Laderaumanteil eines durch die beiden Laderäume zusammengenommen ausgebildeten Gesamtladeraumes der gekoppelten Fahrzeuge ist.

Besonders bevorzugt übermittelt die Auswerteeinheit den Kennwert insbesondere drahtlos an einen Internetserver und/oder speichert ihn lokal ab. Dazu hat die Auswerteeinheit insbesondere ein GSM-Modul zur Bereitstellung eines Internetzugangs und/oder eine lokale Speichereinheit. Durch die Übermittlung an einen Internetserver kann der Kennwert von vom Fahrer des Nutzfahrzeuges abweichenden Anwendern eingesehen werden und insbesondere an eine Online-Frachtenbörse übermittelt werden. Das lokale Abspeichern dient der Datensicherheit und ermöglicht dem Fahrer, sich den Kennwert am Nutzfahrzeug bzw. im Führerhaus anzeigen zu lassen.

In einer vorteilhaften Ausgestaltung der Erfindung wird das Prüfbild von der Kamera über eine Ethernetleitung an die Auswerteeinheit übermittelt. Über dieselbe Ethernetleitung wird die Kamera mit elektrischer Energie versorgt. Insbesondere umfasst das Nutzfahrzeug dazu einen Power-Over-Ethernet-Injektor als Teil der Auswerteeinheit, von dem sowohl elektrische Energie an die Kamera übertragen als auch Daten von der Kamera empfangen werden. Dazu ist an den Power-Over-Ethernet-Injektor eine Spannungsversorgungseinheit angeordnet. Durch diese Ausbildung ist es ermöglicht, dass im Betrieb lediglich ein Kabel mit der Kamera gekoppelt ist, wodurch die Zuverlässigkeit des Verfahrens erhöht ist sowie der Aufwand zu dessen Einrichtung reduziert. Alternativ übersendet die Kamera das Prüfbild über eine drahtlose Verbindung an die Auswerteeinheit und wird durch eine Batterie oder ein Kabel rein zur Energieversorgung mit elektrischer Energie versorgt.

Bevorzugt wird das Prüfbild auf einem Display innerhalb des Führerhauses dargestellt. Insbesondere besteht zwischen dem Display und der Auswerteeinheit eine drahtlose oder kabelgestützte Verbindung, wobei das Display ein ohnehin im Cockpit integriertes oder ein nachzurüstendes ist. Durch die Darstellung des Prüfbildes wird dem Fahrer während des Transports des Ladegutes angezeigt, ob dieses sicher fixiert ist. Gleichzeitig werden dem Fahrer etwaige im Laderaum unbeabsichtigte Objekte angezeigt, ohne dass er dazu den Laderaum öffnen muss.

Bevorzugt wird zur Kalibrierung der Auswerteeinheit vor dem Aufnehmen des Prüfbildes mit der Kamera ein Kalibrierungsbild bei leerem Laderaum aufgenommen. Bei der Aufnahme des Kalibrierungsbildes ist auf einer Ladefläche und/oder an dem Frontbegrenzungselement zumindest ein optischer Code angeordnet. Dieser optische Code ist insbesondere zweidimensional und bei der Aufnahme des Kalibrierungsbildes parallel zur Ladefläche bzw. zum Frontbegrenzungselement oder jeweils parallel dazu angeordnet. Insbesondere handelt es sich bei dem Code um einen QR-Code. Durch das Kalibrierungsbild erkennt die Auswerteeinheit automatisch die Orientierung der Kamera bzw. des Kameraobjektivs innerhalb des Laderaumes. Dadurch identifiziert die Auswerteeinheit insbesondere automatisch die Erstreckung des Laderaumes auf den insbesondere bei gleicher Orientierung der Kamera aufgenommenen Referenz- und Prüfbilder. Insbesondere wird ein horizontaler Schwenkwinkel der Kamera relativ zur Fahrtrichtung sowie ein vertikaler Schwenkwinkel der Kamera relativ zur Horizontalen ermittelt.

Besonders bevorzugt werden zur Kalibrierung der Auswerteeinheit vor dem Aufnehmen des Prüfbildes geometrische Parameter an die Auswerteeinheit übermittelt. Insbesondere betreffen die geometrischen Parameter die Erstreckung des Laderaumes und/oder die Orientierung der Kamera. Dieser Verfahrensschritt wird alternativ oder zusätzlich zur Aufnahme des Kalibrierungsbildes durchgeführt. Auch hierdurch lässt sich insbesondere erreichen, dass der Ausschnitt sowohl des Prüf- als auch des Referenzbildes, der die Ladefläche zumindest anteilig abbildet, automatisch identifiziert wird.

Während der Aufnahme des Prüfbildes wird etwaiges im Laderaum angeordnetes Ladegut oder zumindest die Ladefläche insbesondere durch eine Lichtquelle angeleuchtet. Dadurch lassen sich zuverlässig Helligkeiten auf den Bildern erreichen, die die Durchführung des Verfahrens zuverlässiger ermöglichen. Weiterhin ist das Verfahren durch die Lichtquelle insbesondere auch bei einer lichtdichten Umgrenzung des Laderaumes durchführbar.

In einer vorteilhaften Ausgestaltung der Erfindung hat die Kamera einen horizontalen Bildwinkel von zumindest 70°, bevorzugt von zumindest 90°, besonders bevorzugt von zumindest 100°. Insbesondere hat die Kamera eine Auflösung von zumindest 1280 × 720 Pixel, bevorzugt von zumindest 1920 × 1080 Pixel. Dabei ist die Kamera vorzugsweise so innerhalb des Laderaumes orientiert, dass zumindest 75 %, bevorzugt zumindest 90 % der Ladefläche durch das Referenzbild abgebildet wird. Durch diese Ausbildung der Kamera sowie der damit aufzunehmenden Prüfbilder ist der Kennwert besonders exakt zu berechnen.

In einer vorteilhaften Ausgestaltung der Erfindung ist die Kamera im in Fahrtrichtung hinteren Bereich des Laderaumes angeordnet. Dabei hat die Kamera insbesondere einen Abstand von zumindest zwei Metern von der Ladefläche und ist an einer Eckrunge angeordnet. Bei dieser Anordnung der Kamera kann zumindest bei den meisten Beladungsfällen des Nutzfahrzeugs bereits ohne eine weitere Kamera zuverlässig der Kennwert berechnet werden, ohne dass unbelegte Ladeflächen- oder Laderaumanteile von in Perspektive der Kamera davor angeordnetem Ladegut verdeckt werden, da bei vollständig umschlossenen Laderäumen insbesondere auf Paletten gelagertes Ladegut in der Regel gebündelt und an das Frontbegrenzungselement des Nutzfahrzeuges anschließend auf der Ladefläche angeordnet wird. Durch das Ladegut wird dabei aus Perspektive der Kamera im hinteren Bereich des Laderaumes nur die Ladefläche verdeckt, auf der tatsächlich Ladegut aufsteht. Durch die hohe Anordnung der Kamera werden auch die vorderen Ladeflächenparzellen im Prüfbild durch ausreichend Pixel dargestellt.

Die Aufgabe wird weiterhin durch einen erfindungsgemäßen Nutzfahrzeugaufbau mit einer Ladefläche gelöst. Die Ladefläche wird durch einen Boden ausgebildet, wobei der sich oberhalb von der Ladefläche erstreckende Laderaum im Betrieb seitlich von Begrenzungselementen umgrenzt wird. Insbesondere im Bereich eines Front-und/oder im Bereich eines Heckbegrenzungselementes des Nutzfahrzeugaufbaus ist eine Kamera ortsfest innerhalb des Laderaumes angeordnet und mit einer Auswerteeinheit vernetzt. Der Nutzfahrzeugaufbau ist ausgebildet zur Durchführung des vorbeschriebenen Verfahrens.

Einzelheiten der Erfindung sind den nachfolgend beschriebenen, schematischen Darstellungen zu entnehmen; es zeigen:
- Fig. 1: eine schematische Darstellung des erfindungsgemäßen Nutzfahrzeuges zur Ausführung des erfindungsgemäßen Verfahrens,
- Fig. 2: ein schematisch dargestelltes Prüfbild mit einem Frontbegrenzungselement sowie einer in Ladeflächenparzellen eingeteilten Ladefläche.

Sofern sinnvoll, sind funktional gleichwirkende Teile mit identischen Bezugsziffern versehen.

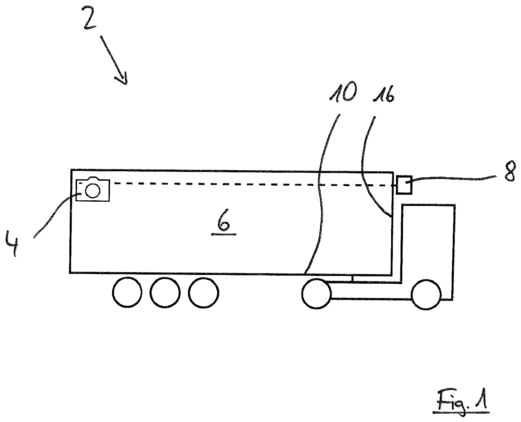

Fig. 1 zeigt schematisch einen erfindungsgemäßen Nutzfahrzeugaufbau als Teil eines Nutzfahrzeuges 2. Der Nutzfahrzeugaufbau hat eine Ladefläche 10 sowie ein als Frontwand ausgebildetes Frontbegrenzungselement 16, die einen Laderaum 6 umgrenzen. Im Laderaum 6 angeordnet ist eine Kamera 4, die drahtlos oder über eine Datenleitung mit einer Auswerteeinheit 8 des Nutzfahrzeugaufbaus gekoppelt ist.

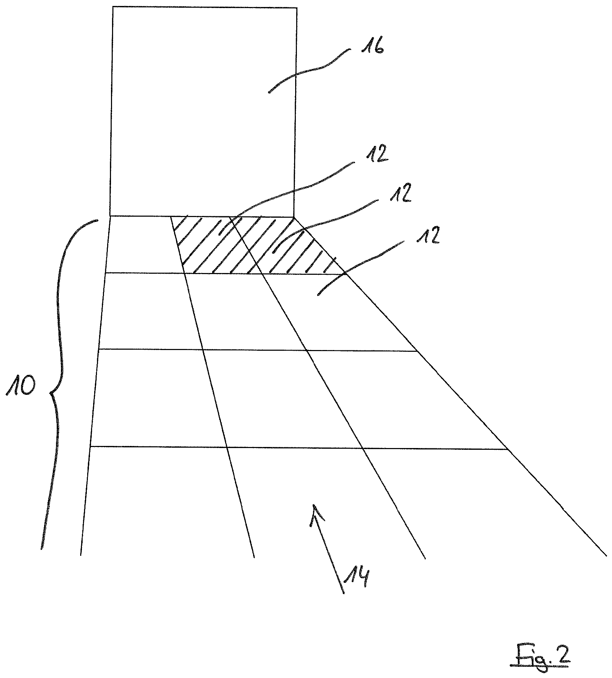

Fig. 2 zeigt schematisch ein Prüfbild, das das Frontbegrenzungselement 16 vollständig sowie die Ladefläche 10 zum Großteil darstellt. Die auf dem Prüfbild gezeigte Ladefläche 10 ist unterteilt in mindestens zwölf Prüfbildausschnitte 12, die je eine rechteckige Ladeflächenparzelle zeigen. Dabei ist die Ladefläche 10 in eine Fahrtrichtung 14 in zumindest vier Ladeflächenparzellen und in eine dazu rechtwinklige Querrichtung in drei Ladeflächenparzellen unterteilt. Die Begrenzungslinien der Ladeflächenparzellen sind parallel zu den Seitengrenzen der Ladefläche 10. Aufgrund der Perspektive der Kamera 4, aus der das Prüfbild gemäß Fig. 2 aufgenommen ist, sind die Begrenzungslinien zwischen den Prüfbildausschnitten 12 nicht als parallel sondern in Richtung eines nicht dargestellten Fluchtpunktes verlaufend dargestellt.

Gemäß dem erfindungsgemäßen Verfahren wird das Prüfbild von der Kamera 4 aufgenommen und von der Auswerteeinheit 8 mit einem Referenzbild abgeglichen. Dabei wird jeder Prüfbildausschnitt 12 einzeln mit einem zugeordneten Referenzbildausschnitt abgeglichen und somit jede Ladeflächenparzelle einzeln entweder als mit Ladegut belegt oder von Ladegut frei bewertet. In Fig. 2 befindet sich in zwei der gezeigten Prüfbildausschnitte bzw. Ladeparzellen nicht dargestelltes Ladegut (sh. schraffierte Prüfbildausschnitte). Diese Prüfbildausschnitte 12 werden von der Auswerteeinheit 8 als mit Ladegut belegt identifiziert und fließen somit in die Berechnung des Kennwertes mit ein. Die weiteren Prüfbildausschnitte 12 werden als nicht mit Ladegut belegt identifiziert und fließen ebenso in die Berechnung des Kennwertes mit ein.

## Patentansprüche

1. Verfahren zur Überwachung des Beladungszustandes von Nutzfahrzeugen oder Wechselaufbauten für Nutzfahrzeuge (2), wobei
- eine Kamera (4) ein Prüfbild eines Laderaums (6) aufnimmt,
- eine Auswerteeinheit (8) das Prüfbild mit einem hinterlegten Referenzbild abgleicht und zumindest einen Kennwert für das Ausmaß eines mit Ladegut belegten oder von Ladegut freien Laderaumanteils berechnet,
- beim Abgleichen der eine Ladefläche (10) zeigende Teil des Prüfbildes in Prüfbildausschnitte (12) unterteilt wird, wovon jeder eine gedachte Ladeflächenparzelle zeigt,
- jeder Prüfbildausschnitt (12) einzeln mit einem zugeordneten Referenzbildausschnitt abgeglichen wird und jede Ladeflächenparzelle einzeln entweder als mit Ladegut belegt oder von Ladegut frei bewertet wird, das Verfahren ist **dadurch gekennzeichnet, dass**
- eine Übereinstimmung von dem Prüfbildausschnitt (12) mit dem Referenzbildausschnitt anhand der Helligkeit und/oder der Farbwerte der den Prüfwerteausschnitt (12) und den Referenzbildausschnitt bildenden Pixel beurteilt wird.

2. Verfahren nach Anspruch 1, **dadurch gekennzeichnet, dass** in eine Fahrtrichtung (14) zumindest vier Prüfbildabschnitte (12) aneinander angrenzen und insbesondere in eine Querrichtung zumindest drei Prüfbildausschnitte (12) aneinander angrenzen.

3. Verfahren nach Anspruch 1, **dadurch gekennzeichnet, dass** eine Ladeflächenparzelle als von Ladegut frei bewertet wird, wenn einer der eine Ladeflächenparzelle zeigenden Prüfbildausschnitte (12) zu zumindest 50 %, insbesondere zu zumindest 90 % seiner Fläche mit dem zugeordneten Referenzbildausschnitt übereinstimmt.

4. Verfahren nach einem der vorhergehenden Ansprüche, **dadurch gekennzeichnet, dass** zumindest eine weitere insbesondere im vorderen Bereich des Laderaumes angeordnete Kamera (4) ein weiteres Prüfbild desselben Laderaumes (6) aufnimmt.

5. Verfahren nach einem der vorhergehenden Ansprüche, **dadurch gekennzeichnet, dass** unterschiedliche Kameras (4) je ein Prüfbild unterschiedlicher Laderäume (6) von miteinander gekoppelten Nutzfahrzeugen (2) aufnehmen und an dieselbe Auswerteeinheit (8) übermitteln.

6. Verfahren nach einem der vorhergehenden Ansprüche, **dadurch gekennzeichnet, dass** die Auswerteeinheit (8) den Kennwert insbesondere drahtlos an einen Internetserver übermittelt und/oder lokal abspeichert.

7. Verfahren nach einem der vorhergehenden Ansprüche, **dadurch gekennzeichnet, dass** das Prüfbild von der Kamera (4) über eine Ethernetleitung an die Auswerteeinheit übermittelt wird, wobei die Kamera über dieselbe Ethernetleitung mit elektrischer Energie versorgt wird.

8. Verfahren nach einem der vorhergehenden Ansprüche, **dadurch gekennzeichnet, dass** das Prüfbild auf einem Display innerhalb eines Führerhauses dargestellt wird.

9. Verfahren nach einem der vorhergehenden Ansprüche, **dadurch gekennzeichnet, dass** zur Kalibrierung der Auswerteeinheit (8) vor dem Aufnehmen des Prüfbildes mit der Kamera (4) das Referenzbild vom leerem Laderaum (6) aufgenommen wird.

10. Verfahren nach einem der vorhergehenden Ansprüche, **dadurch gekennzeichnet, dass** zur Kalibrierung der Auswerteeinheit (8) vor dem Aufnehmen des Prüfbildes mit der Kamera (4) ein Kalibrierungsbild bei leerem Laderaum (6) aufgenommen wird, während auf einer Ladefläche (10) und/oder an einem Frontbegrenzungselement zumindest ein optischer Code angeordnet ist.

11. Verfahren nach einem der vorhergehenden Ansprüche, **dadurch gekennzeichnet, dass** zur Kalibrierung der Auswerteeinheit (8) vor dem Aufnehmen des Prüfbildes geometrische Parameter, insbesondere vom Laderaum (6) und/oder von der Orientierung der Kamera (4) darin, an die Auswerteeinheit (8) übermittelt werden.

12. Verfahren nach einem der vorhergehenden Ansprüche, **dadurch gekennzeichnet, dass** die Kamera (4) als 2D-Kamera ausgebildet ist.

13. Verfahren nach einem der vorhergehenden Ansprüche, **dadurch gekennzeichnet, dass** die Kamera (4) einen horizontalen Bildwinkel von zumindest 70°, bevorzugt von zumindest 90°, besonders bevorzugt von zumindest 100° hat und/oder eine Auflösung von zumindest 1280 × 720 Pixeln, insbesondere von zumindest 1920 × 1080 Pixeln hat.

14. Verfahren nach einem der vorhergehenden Ansprüche, **dadurch gekennzeichnet, dass** die Kamera (4) im in Fahrtrichtung (14) hinteren Bereich des Laderaumes (6), insbesondere mit zumindest 2 m Abstand von der Ladefläche (10) an einer Eckrunge angeordnet ist.

15. Nutzfahrzeugaufbau mit einem eine Ladefläche (10) ausbildenden Boden sowie mehreren einen sich oberhalb der Ladefläche (10) erstreckenden Laderaum (6) im Betrieb seitlich umgrenzenden Begrenzungselementen, wobei insbesondere im Bereich eines Front- (16) und/oder im Bereich eines Heckbegrenzungselement eine Kamera (4) ortsfest innerhalb des Laderaumes (6) angeordnet und vernetzt mit einer Auswerteeinheit (8) ist, **dadurch gekennzeichnet dass** die Auswerteeinheit zur Durchführung der Schritte des Verfahrens nach einem der Ansprüche 1 bis 14 ausgebildet ist.

## Claims

1. A method for monitoring the load status of commercial vehicles or interchangeable bodies for commercial vehicles (2), wherein
- a camera (4) records an inspection image of a cargo space (6),
- an evaluation unit (8) compares the inspection image to a stored reference image and calculates at least one characteristic value for the extent of a cargo space component occupied with cargo or free of cargo,
- during the comparison, the part of the inspection image showing a cargo surface (10) is divided into inspection image sections (12), each one of which shows an imaginary cargo surface parcel,
- each inspection image section (12) is individually compared to an associated reference image section and each cargo surface parcel is assessed as either occupied by cargo or free of cargo,
the method is **characterized in that**
- a correspondence of the inspection image section (12) to the reference image section is judged on the basis of the brightness and/or the colour values of the pixels forming the test value detail (12) and the reference image section.

2. The method according to Claim 1, **characterized in that** at least four inspection image sections (12) adjoin one another in a travel direction (14) and in particular at least three inspection image sections (12) adjoin one another in a transverse direction.

3. The method according to Claim 1, **characterized in that** a cargo surface parcel is assessed to be free of cargo when one of the inspection image sections (12) showing a cargo surface parcel corresponds on at least 50%, in particular at least 90% of its surface to the associated reference image section.

4. The method according to any one of the preceding claims, **characterized in that** at least one further camera (4), in particular arranged in the front region of the cargo space, records a further inspection image of the same cargo space (6).

5. The method according to any one of the preceding claims, **characterized in that** different cameras (4) each record an inspection image of different cargo spaces (6) of commercial vehicles (2) coupled to one another and transmit them to the same evaluation unit (8).

6. The method according to any one of the preceding claims, **characterized in that** the evaluation unit (8) transmits the characteristic value, in particular wirelessly, to an Internet server and/or stores it locally.

7. The method according to any one of the preceding claims, **characterized in that** the inspection image is transmitted from the camera (4) via an ethernet line to the evaluation unit, wherein the camera is supplied with electrical energy via the same ethernet line.

8. The method according to any one of the preceding claims, **characterized in that** the inspection image is displayed on a display inside a driver cab.

9. The method according to any one of the preceding claims, **characterized in that** the reference image of the empty cargo space (6) is recorded to calibrate the evaluation unit (8) before the recording of the inspection image using the camera (4).

10. The method according to any one of the preceding claims, **characterized in that** a calibration image is recorded with empty cargo space (6), while at least one optical code is arranged on a cargo surface (10) and/or on a front boundary element, for the calibration of the evaluation unit (8) before the recording of the inspection image using the camera (4).

11. The method according to any one of the preceding claims, **characterized in that** geometric parameters, in particular of the cargo space (6) and/or of the orientation of the camera (4) therein, are transmitted to the evaluation unit (8) to calibrate the evaluation unit (8) before the recording of the inspection image.

12. The method according to any one of the preceding claims, **characterized in that** the camera (4) is designed as a 2D camera.

13. The method according to any one of the preceding claims, **characterized in that** the camera (4) has a horizontal image angle of at least 70°, preferably of at least 90°, particularly preferably of at least 100° and/or has a resolution of at least 1280 × 720 pixels, in particular of at least 1920 × 1080 pixels.

14. The method according to any one of the preceding claims, **characterized in that** the camera (4) is arranged in the rear region of the cargo space (6) in the travel direction (14), in particular with at least 2 m distance from the cargo surface (10) on an end stanchion.

15. A commercial vehicle structure having a bottom forming a cargo surface (10) and multiple delimitation elements laterally bounding a cargo space (6) in operation and extending above the cargo surface (10), wherein in particular a camera (4) is arranged fixed in place inside the cargo space (6) in the region of a front (16) and/or in the region of a rear delimitation element and is networked with an evaluation unit (8), **characterized in that** the evaluation unit is designed to carry out the steps of the method according to any one of claims 1 to 14.

## Revendications

1. Procédé de surveillance de l'état de chargement des véhicules utilitaires ou caisses mobiles pour véhicules utilitaires (2), dans lequel
- une caméra (4) prend une image de contrôle d'un espace de chargement (6),
- une unité d'évaluation (8) compare l'image de contrôle avec une image de référence enregistrée et calcule au moins une valeur caractéristique pour l'étendue d'une part d'espace de chargement occupée par un chargement ou exempte de chargement,
- lors de la comparaison, la partie de l'image de contrôle montrant une surface de chargement (10) est subdivisée en sections d'image de contrôle (12), dont chacune montre une parcelle de surface de chargement imaginaire,
- chaque section d'image de contrôle (12) est comparée individuellement avec une section d'image de référence associée et chaque parcelle de surface de chargement est considérée individuellement soit comme occupée par un chargement soit comme exempte de chargement, le procédé est **caractérisé en ce que**
- une correspondance de la section d'image de contrôle (12) avec la section d'image de référence est évaluée à l'aide de la luminosité et/ou des valeurs de couleur des pixels formant la section de valeur de contrôle (12) et la section d'image de référence.

2. Procédé selon la revendication 1, **caractérisé en ce que** dans un sens de circulation (14) au moins quatre sections d'image de contrôle (12) sont adjacentes l'une à l'autre et en particulier dans un sens transversal au moins trois sections d'image de contrôle (12) sont adjacentes l'une à l'autre.

3. Procédé selon la revendication 1, **caractérisé en ce qu'**une parcelle de surface de chargement est considérée comme exempte de chargement, lorsqu'une des sections d'image de contrôle (12) montrant une parcelle de surface de chargement correspond pour au moins 50 %, en particulier pour au moins 90 % de sa surface avec la section d'image de référence associée.

4. Procédé selon l'une quelconque des revendications précédentes, **caractérisé en ce qu'**au moins une autre caméra (4) agencée en particulier dans la zone avant de l'espace de chargement prend une autre image de contrôle du même espace de chargement (6).

5. Procédé selon l'une quelconque des revendications précédentes, **caractérisé en ce que** différentes caméras (4) prennent chacune une image de contrôle de différents espaces de chargement (6) de véhicules utilitaires (2) couplés les uns aux autres et la transmettent à la même unité d'évaluation (8).

6. Procédé selon l'une quelconque des revendications précédentes, **caractérisé en ce que** l'unité d'évaluation (8) transmet la valeur caractéristique en particulier sans fil à un serveur Internet et/ou la met en mémoire localement.

7. Procédé selon l'une quelconque des revendications précédentes, **caractérisé en ce que** l'image de contrôle est transmise de la caméra (4) à l'unité d'évaluation par le biais d'une ligne Ethernet, dans lequel la caméra est alimentée en énergie électrique par le biais de la même ligne Ethernet.

8. Procédé selon l'une quelconque des revendications précédentes, **caractérisé en ce que** l'image de contrôle est représentée sur un écran à l'intérieur d'une cabine de conduite.

9. Procédé selon l'une quelconque des revendications précédentes, **caractérisé en ce que** pour l'étalonnage de l'unité d'évaluation (8) avant la prise de l'image de contrôle avec la caméra (4), l'image de référence de l'espace de chargement (6) vide est prise.

10. Procédé selon l'une quelconque des revendications précédentes, **caractérisé en ce que** pour l'étalonnage de l'unité d'évaluation (8) avant la prise de l'image de contrôle avec la caméra (4), une image d'étalonnage est prise lorsque l'espace de chargement (6) est vide, tandis qu'au moins un code optique est agencé sur une surface de chargement (10) et/ou au niveau d'un élément de délimitation avant.

11. Procédé selon l'une quelconque des revendications précédentes, **caractérisé en ce que** pour l'étalonnage de l'unité d'évaluation (8) avant la prise de l'image de contrôle, des paramètres géométriques, en particulier de l'espace de chargement (6) et/ou de l'orientation de la caméra (4) à l'intérieur, sont transmis à l'unité d'évaluation (8).

12. Procédé selon l'une quelconque des revendications précédentes, **caractérisé en ce que** la caméra (4) est réalisée sous forme de caméra 2D.

13. Procédé selon l'une quelconque des revendications précédentes, **caractérisé en ce que** la caméra (4) a un angle de prise de vue horizontal d'au moins 70°, de préférence d'au moins 90°, de manière particulièrement préférée d'au moins 100° et/ou a une résolution d'au moins 1280 × 720 pixels, en particulier d'au moins 1920 × 1080 pixels.

14. Procédé selon l'une quelconque des revendications précédentes, **caractérisé en ce que** la caméra (4) est agencée dans la zone arrière dans le sens de circulation (14) de l'espace de chargement (6), en particulier à au moins 2 m de distance de la surface de chargement (10) au niveau d'un montant d'angle.

15. Structure de véhicule utilitaire avec un fond formant une surface de chargement (10) ainsi que plusieurs éléments de délimitation entourant latéralement en fonctionnement un espace de chargement (6) s'étendant au-dessus de la surface de chargement (10), dans laquelle en particulier dans la zone d'un élément de délimitation avant (16) et/ou dans la zone d'un élément de délimitation arrière une caméra (4) est agencée de manière stationnaire à l'intérieur de l'espace de chargement (6) et est interconnectée avec une unité d'évaluation (8), **caractérisée en ce que** l'unité d'évaluation est réalisée pour la réalisation des étapes du procédé selon l'une quelconque des revendications 1 à 14.
